# EUROPEAN PATENT APPLICATION

(11) **EP 3 798 239 A1**
(43) Date of publication of application: **31.03.2021**
(21) Application number: 19807162.3
(22) Date of filing: 27.03.2019
(51) Int. Cl.: C08F 4/6192, C08F 4/54, C08F 4/58, C08F 210/00

(54) **POLYMERIZATION CATALYST AND METHOD FOR PRODUCING COPOLYMER**

(30) Priority: 21.05.2018 JP 2018097238
(71) Applicant: Bridgestone Corporation, Chuo-Ku Tokyo 104-8340 (JP)
(72) Inventor: TAKANO Shigenaga, Tokyo 104-8340 (JP); TARDIF Olivier, Tokyo 104-8340 (JP); HOTTA Aya, Tokyo 104-8340 (JP)
(74) Representative: Bardehle Pagenberg Partnerschaft mbB Patentanwälte Rechtsanwälte
(86) International application number: PCT/JP2019/013427
(87) International publication number: WO 2019/225146

(57) **Abstract**

Provided is a polymerization catalyst capable of improving polymerization activity in copolymerization. A polymerization catalyst comprises a main catalyst as a component (A) having a ligand represented by a general formula (I): 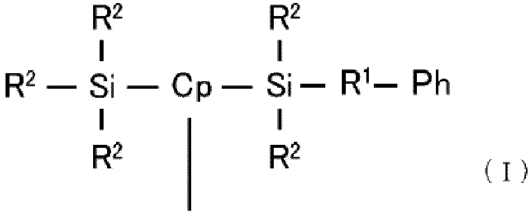 where Cp is a cyclopentadiene-based skeleton selected from a cyclopentadiene skeleton, an indene skeleton, and a fluorene skeleton, Ph is an aromatic ring, R¹ is a single bond or any group, and R² are any groups that may be the same or different.

## Description

### TECHNICAL FIELD

The present disclosure relates to a polymerization catalyst and a method of producing a copolymer.

### BACKGROUND

Typically, rubber products (tires, conveyor belts, anti-vibration rubbers, seismic isolation rubbers, etc.) are required to have high durability (such as breaking resistance, wear resistance, and crack growth resistance) and high weather resistance. To meet this requirement, various rubber components and rubber compositions are developed.

For example, WO 2012/014455 A1 (PTL 1) discloses a copolymer of a conjugated diene compound and a non-conjugated olefin wherein the cis-1,4 bond content of the conjugated diene unit (conjugated diene compound-derived unit) is more than 70.5 mol% and the content of the non-conjugated olefin is 10 mol% or more. According to PTL 1, this copolymer is used to produce rubber having good crack growth resistance and weather resistance.

For example, WO 2015/190072 A1 (PTL 2) discloses a copolymer that contains a conjugated diene compound-derived unit, a non-conjugated olefin compound-derived unit, and an aromatic vinyl compound-derived unit, wherein the cis-1,4 bond content in the whole conjugated diene compound-derived unit is 50 % or more. According to PTL 2, this copolymer contributes to improved durability and weather resistance of rubber products.

### CITATION LIST

### Patent Literature

PTL 1: WO 2012/014455 A1
PTL 2: WO 2015/190072 A1

### SUMMARY

### (Technical Problem)

A catalyst used when copolymerizing at least a conjugated diene compound and a non-conjugated olefin compound as disclosed in PTL 1 and PTL 2 is required to improve polymerization activity (monomer reactivity). Conventional catalysts have room for improvement in terms of industrial mass production of copolymers.

It could therefore be helpful to provide a polymerization catalyst capable of improving polymerization activity in copolymerization. It could also be helpful to provide a copolymer production method capable of efficiently producing a copolymer.

### (Solution to Problem)

A polymerization catalyst according to the present disclosure comprises a main catalyst as a component (A) having a ligand represented by a general formula (I): 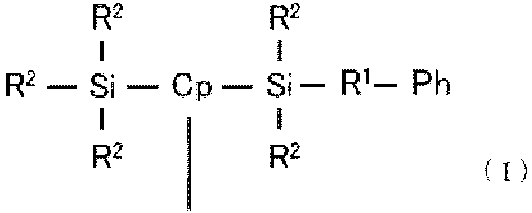 where Cp is a cyclopentadiene-based skeleton selected from a cyclopentadiene skeleton, an indene skeleton, and a fluorene skeleton, Ph is an aromatic ring, R¹ is a single bond or any group, and R² are any groups that may be the same or different.

A method of producing a copolymer according to the present disclosure comprises copolymerizing monomers including a non-conjugated olefin compound and a conjugated diene compound in presence of the polymerization catalyst described above.

### (Advantageous Effect)

It is therefore possible to provide a polymerization catalyst capable of improving polymerization activity in copolymerization. It is also possible to provide a copolymer production method capable of efficiently producing a copolymer.

### DETAILED DESCRIPTION

One of the disclosed embodiments will be described in detail below.

### (Polymerization catalyst)

A polymerization catalyst according to one of the disclosed embodiments (hereafter also referred to as "polymerization catalyst according to this embodiment") contains a main catalyst (component (A)) which will be described in detail later. The polymerization catalyst according to this embodiment may optionally further contain an organic metal compound (component (B)), an ionic compound (component (C)), a halogen compound (component (D)), an aluminoxane (component (E)), and the like as appropriate, which will be described later.

### <Main catalyst (component (A))>

The main catalyst contained in the polymerization catalyst according to this embodiment has a ligand represented by a general formula (I): 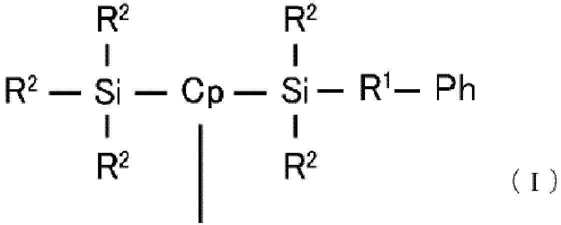 where Cp is a cyclopentadiene-based skeleton selected from a cyclopentadiene skeleton, an indene skeleton, and a fluorene skeleton, Ph is an aromatic ring, R¹ is a single bond or any group, and R² are any groups that may be the same or different. This ligand binds to a central metal in the main catalyst.

In detail, it is important that the ligand of the main catalyst (component (A)) in the polymerization catalyst according to this embodiment has the following features in order to achieve the object of improving polymerization activity in copolymerization:
(1) Two atoms of silicon (Si) bind to the cyclopentadiene-based skeleton.
(2) At least one of the terminal groups extending from the silicon (Si) binding to the cyclopentadiene-based skeleton has an aromatic ring.

As the main catalyst (component (A)) contained in the polymerization catalyst according to this embodiment, one catalyst may be used alone or two or more catalysts may be used in combination.

Cp in the general formula (I) is a cyclopentadiene-based skeleton selected from a cyclopentadiene skeleton, an indene skeleton, and a fluorene skeleton, as mentioned above. Herein, the cyclopentadiene skeleton denotes a skeleton having at least a cyclopentadiene ring represented by a formula (1):

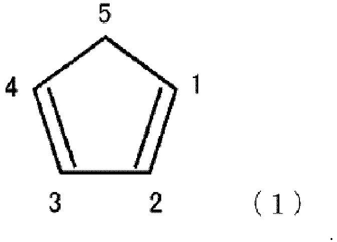

The indene skeleton denotes a skeleton having at least an indene ring represented by a formula (2):

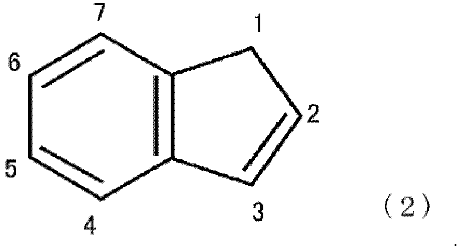

The fluorene skeleton denotes a skeleton having at least a fluorene ring represented by a formula (3):

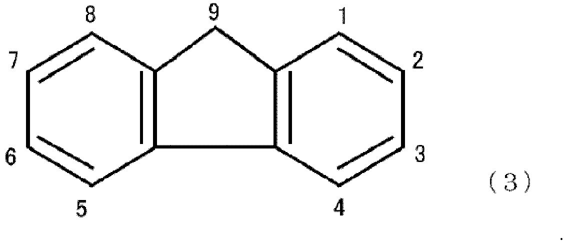

Of these, the cyclopentadiene-based skeleton is preferably selected from the cyclopentadiene skeleton and the indene skeleton, and is more preferably the indene skeleton, from the viewpoint of improving polymerization activity more effectively.

In the case where the cyclopentadiene-based skeleton is selected from the cyclopentadiene skeleton and the indene skeleton, preferably the respective two silicon atoms in the general formula (I) bind to the first position and the third position of the cyclopentadiene-based skeleton. This can improve the production easiness of the main catalyst (component (A)), and improve the polymerization activity more sufficiently.

The cyclopentadiene-based skeleton selected from the cyclopentadiene skeleton, the indene skeleton, and the fluorene skeleton may have a bond to any substituent, in addition to the bond to the two silicon atoms. From the viewpoint of achieving the intended effects more sufficiently, however, the cyclopentadiene-based skeleton preferably does not have a bond to any substituent.

The silicon (Si) in the general formula (I) preferably binds directly to carbon in the cyclopentadiene ring, indene ring, or fluorene ring in the cyclopentadiene-based skeleton.

Ph in the general formula (I) is an aromatic ring. The aromatic ring is not limited, and examples include a benzene ring, a naphthalene ring, an anthracene ring, a phenanthrene ring, and an azulene ring.

R¹ in the general formula (I) is a single bond or any group. A group that can be R¹ is not limited, and examples include an alkylene group having a carbon number of 1 to 20. The alkylene group may have a group containing an element other than carbon and hydrogen, at a terminal or inside thereof. In particular, R¹ is preferably a methylene group.

R² in the general formula (I) are any groups that may be the same or different. A group (or groups) that can be R² is not limited, and examples include an alkyl group, an alkenyl group, and an alkynyl group having a carbon number of 1 to 20, and a cycloalkyl group having a carbon number of 3 to 20. The group may be any of linear, branched, and cyclic, may have a group containing an element other than carbon and hydrogen at a terminal or inside thereof, and may have the foregoing aromatic ring at a terminal or inside thereof. The group (or groups) that can be R² is preferably selected from an alkyl group, an alkenyl group, and an alkynyl group having a carbon number of 1 to 10, and more preferably selected from an alkyl group, an alkenyl group, and an alkynyl group having a carbon number of 1 to 6.

The central metal to which the ligand represented by the general formula (I) binds is not limited as long as it is a metal element, and may be selected as appropriate depending on the intended use. From the viewpoint of improving polymerization activity more sufficiently, the central metal to which the ligand binds is preferably selected from rare earth elements, and more preferably selected from samarium (Sm), neodymium (Nd), praseodymium (Pr), gadolinium (Gd), cerium (Ce), holmium (Ho), scandium (Sc), and yttrium (Y).

The "rare earth elements" denote scandium (Sc), yttrium (Y), and lanthanoid elements. The "lanthanoid elements" denote 15 elements with atomic numbers 57 to 71.

More specifically, from the viewpoint of efficiently improving polymerization activity, the main catalyst (component (A)) having the foregoing ligand is preferably represented by a general formula (II): 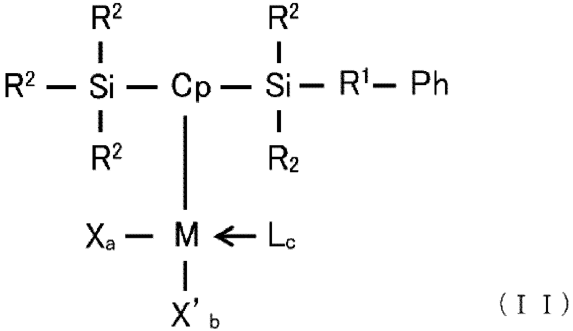 where Cp, Ph, R¹, and R² have the same definitions as in the general formula (I), M is the central metal selected from rare earth elements, X and X' are each a hydrogen atom, a halogen atom, an alkoxide group, a thiolate group, an amide group, a silyl group, or a hydrocarbon group having a carbon number of 1 to 20, the hydrocarbon group having a carbon number of 1 to 20 may have a group containing silicon, oxygen, nitrogen, sulfur, or phosphorus at a terminal or inside thereof, X and X' may be the same or different, a and b are each independently an integer of 0 to 3 where a + b ≥ 1, L is a neutral Lewis base, and c is an integer of 0 to 3.

X and X' in the general formula (II) are each a hydrogen atom, a halogen atom, an alkoxide group, a thiolate group, an amide group, a silyl group, or a hydrocarbon group having a carbon number of 1 to 20, as mentioned above.

Examples of the halogen atom include a fluorine atom, a chlorine atom, a bromine atom, and an iodine atom. Of these, a chlorine atom or a bromine atom is preferable.

Examples of the alkoxide group include aliphatic alkoxy groups such as a methoxy group, an ethoxy group, a propoxy group, an n-butoxy group, an isobutoxy group, a sec-butoxy group, and a tert-butoxy group; and aryl oxide groups such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group. Of these, a 2,6-di-tert-butylphenoxy group is preferable.

Examples of the thiolate group include aliphatic thiolate groups such as a thiomethoxy group, a thioethoxy group, a thiopropoxy group, a thio-n-butoxy group, a thioisobutoxy group, a thio-sec-butoxy group, and a thio-tert-butoxy group; and aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, and a 2,4,6-triisopropylthiophenoxy group. Of these, a 2,4,6-triisopropylthiophenoxy group is preferable.

Examples of the amide group include aliphatic amide groups such as a dimethyl amide group, a diethyl amide group, and a diisopropyl amide group; arylamide groups such as a phenyl amide group, a 2,6-di-tert-butylphenyl amide group, a 2,6-diisopropylphenyl amide group, a 2,6-dineopentylphenyl amide group, a 2-tert-butyl-6-isopropylphenyl amide group, a 2-tert-butyl-6-neopentylphenyl amide group, a 2-isopropyl-6-neopentylphenyl amide group, and a 2,4,6-tert-butylphenyl amide group; bis(dialkylsilyl)amide groups such as a bis(dimethylsilyl)amide group; and bis(trialkylsilyl)amide groups such as a bis(trimethylsilyl)amide group. Of these, a bis(trimethylsilyl)amide group is preferable.

Examples of the silyl group include a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group. Of these, a tris(trimethylsilyl)silyl group is preferable.

Specific examples of the hydrocarbon group having a carbon number of 1 to 20 include linear or branched aliphatic hydrocarbon groups such as a methyl group, an ethyl group, an n-propyl group, an isopropyl group, an n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; and aralkyl groups such as a benzyl group. The hydrocarbon group having a carbon number of 1 to 20 may have a group containing silicon, oxygen, nitrogen, sulfur, or phosphorus at a terminal or inside thereof.

The silicon-containing group is, for example, a trimethylsilyl group. That is, X and X' may be, for example, a (trimethylsilyl)methyl group, a (bistrimethylsilyl)methyl group, or the like. As the hydrocarbon group having a carbon number of 1 to 20, a methyl group, an ethyl group, an isobutyl group, a (trimethylsilyl)methyl group, or the like is preferable.

L in the general formula (II) is a neutral Lewis base. Examples of the neutral Lewis base L include tetrahydrofuran (THF), diethyl ether, dimethylaniline, trimethylphosphine, lithium chloride, neutral olefins, and neutral diolefins. In the case where the main catalyst contains a plurality of neutral Lewis bases L, the neutral Lewis bases L may be the same or different.

The main catalyst (component (A)) contained in the polymerization catalyst according to this embodiment can be, for example, prepared by coordinate bond between a ligand component (component (a1)) and any compound containing metal, the ligand component (component (a1)) being represented by a general formula (Ia): 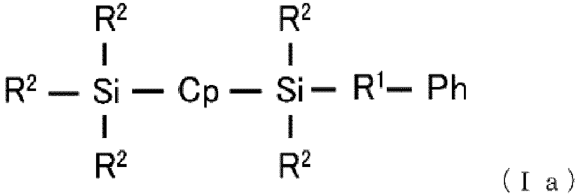 where Cp, Ph, R¹, and R² have the same definitions as in the general formula (I).

More specifically, the main catalyst (component (A)) can be prepared by synthesis between the ligand component (component (a1)) represented by the general formula (Ia) and a rare earth element compound (component (a2)) represented by a general formula (Ib): 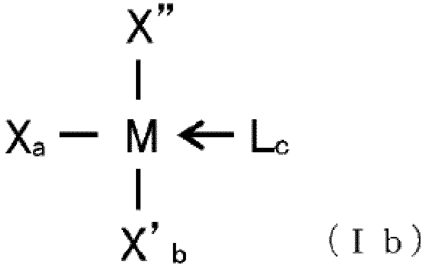 where M is the central metal selected from rare earth elements, X, X', and X" are each a hydrogen atom, a halogen atom, an alkoxide group, a thiolate group, an amide group, a silyl group, or a hydrocarbon group having a carbon number of 1 to 20, the hydrocarbon group having a carbon number of 1 to 20 may have a group containing silicon, oxygen, nitrogen, sulfur, or phosphorus at a terminal or inside thereof, X, X', and X" may be the same or different, a and b are each independently an integer of 0 to 3 where a + b ≥ 1, L is a neutral Lewis base, and c is an integer of 0 to 3.

### <Organic metal compound (component (B))>

The polymerization catalyst according to this embodiment preferably further contains the component (B), i.e. the organic metal compound (component (B)) represented by a general formula (III):

ZR²¹ₑR²²_{f}R²³_{g} (III)

where Z is a metal element selected from the group consisting of elements of groups 1, 2, 12, and 13 in the periodic table, R²¹ and R²² are each a hydrocarbon group having a carbon number of 1 to 10 or a hydrogen atom, R²³ is a hydrocarbon group having a carbon number of 1 to 10, R²¹, R²², and R²³ may be the same or different, e is 1 and f and g are 0 in the case where Z is a metal element of group 1 in the periodic table, e and f are 1 and g is 0 in the case where Z is a metal element of group 2 or 12 in the periodic table, and e, f, and g are 1 in the case where Z is a metal element of group 13 in the periodic table. The component (B) has a molecular weight control function and a scavenger function. As a result of the polymerization catalyst further containing the component (B), the polymerization activity can be further enhanced. One organic metal compound (component (B)) may be used alone, or two or more organic metal compounds (components (B)) may be used in combination.

The component (B) is preferably an organic aluminum compound represented by a general formula (III-2):

AlR²¹R²²R²³ (III-2)

where R²¹ and R²² are each a hydrocarbon group having a carbon number of 1 to 10 or a hydrogen atom, R³ is a hydrocarbon group having a carbon number of 1 to 10, and R²¹, R²², and R²³ may be the same or different.

Examples of the organic aluminum compound include trimethyl aluminum, triethyl aluminum, tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, and trioctyl aluminum; diethyl aluminum hydride, di-n-propyl aluminum hydride, di-n-butyl aluminum hydride, diisobutyl aluminum hydride, dihexyl aluminum hydride, diisohexyl aluminum hydride, dioctyl aluminum hydride, and diisooctyl aluminum hydride; and ethyl aluminum dihydride, n-propyl aluminum dihydride, and isobutyl aluminum dihydride. In particular, triethyl aluminum, triisobutyl aluminum, diethyl aluminum hydride, and diisobutyl aluminum hydride are preferable, and diisobutyl aluminum hydride is further preferable. These organic aluminum compounds may be used alone or in combination of two or more.

The proportion (molar ratio) of the content of the component (B) to the content of the component (A) in the polymerization catalyst (the proportion of the amount of the component (B) to the amount of the component (A) in the polymerization system) is preferably 3 or more, more preferably 5 or more, further preferably 7 or more, and particularly preferably 10 or more, and is preferably 50 or less, more preferably 40 or less, and further preferably 30 or less, from the viewpoint of reaction activity.

### <Ionic compound (component (C))>

The polymerization catalyst according to this embodiment preferably further contains the ionic compound (component (C)). As a result of the polymerization catalyst further containing the component (C), for example in the case of using ethylene as a monomer, each monomer other than the ethylene can be efficiently copolymerized with the ethylene. One component (C) may be used alone, or two or more components (C) may be used in combination.

The component (C) is, for example, an ionic compound consisting of a non-coordinating anion and a cation.

Examples of the non-coordinating anion include tetravalent boron anions such as tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetrakis(pentafluorophenyl)borate, tetra(tolyl)borate, tetra(xylyl)borate, (triphenyl,pentafluorophenyl)borate, [tris(pentafluorophenyl),phenyl]borate, and tridecahydride-7,8-dicarbaundecaborate. Tetrakis(pentafluorophenyl)borate is preferable.

Examples of the cation include a carbonium cation, an oxonium cation, an ammonium cation, a phosphonium cation, a cycloheptatrienyl cation, a ferrocenium cation having a transition metal, and a trityl cation.

Specific examples of the carbonium cation include trisubstituted carbonium cations such as a triphenylcarbonium cation and a tri(substituted phenyl)carbonium cation. Specific examples of the tri(substituted phenyl)carbonium cation include a tri(methylphenyl)carbonium cation and a tri(dimethylphenyl)carbonium cation.

Specific examples of the ammonium cation include trialkylammonium cations such as a trimethylammonium cation, a triethylammonium cation, a tripropylammonium cation, and a tributylammonium cation (e.g. a tri(n-butyl)ammonium cation); N,N-dialkylanilinium cations such as an N,N-dimethylanilinium cation, an N,N-diethylanilinium cation, and an N,N-2,4,6-pentamethylanilinium cation; and dialkylammonium cations such as a diisopropylammonium cation and a dicyclohexylammonium cation.

Specific examples of the phosphonium cation include triarylphosphonium cations such as a triphenylphosphonium cation, a tri(methylphenyl)phosphonium cation, and a tri(dimethylphenyl)phosphonium cation.

The ionic compound is preferably a compound obtained by combining a non-coordinating anion and a cation selected from the aforementioned non-coordinating anions and cations. Specifically, N,N-dimethylanilinium tetrakis(pentafluorophenyl)borate, triphenylcarbonium tetrakis(pentafluorophenyl)borate, trityltetrakis(pentafluorophenyl)borate, and the like are preferable.

The proportion (molar ratio) of the content of the component (C) to the content of the component (A) in the polymerization catalyst (the proportion of the amount of the component (C) to the amount of the component (A) in the polymerization system) is preferably 0.1 or more, more preferably 0.5 or more, and further preferably 0.7 or more, and is preferably 2.0 or less, more preferably 1.5 or less, and further preferably 1.3 or less, from the viewpoint of reaction activity.

### <Halogen compound (component (D))>

The polymerization catalyst according to this embodiment preferably further contains the halogen compound (component (D)). As a result of the polymerization catalyst further containing the component (D), for example in the case of copolymerizing monomers including a non-conjugated olefin compound and a conjugated diene compound, the cis-1,4 bond content in the conjugated diene compound-derived unit can be further enhanced. Examples of the halogen compound include a halogen-containing compound (hereafter also referred to as "component (D-1)") which is a Lewis acid, a complex compound of a metal halide and a Lewis base (hereafter also referred to as "component (D-2)"), and an organic compound containing an active halogen (hereafter also referred to as "component(D-3)"). One component (D) may be used alone, or two or more components (D) may be used in combination.

The component (D-1) is, for example, a halogen-containing compound containing an element of group 3, group 4, group 5, group 6, group 8, group 13, group 14, or group 15 in the periodic table. In particular, an aluminum halide or an organometallic halide is preferable.

Examples of the halogen-containing compound which is a Lewis acid include titanium tetrachloride, tungsten hexachloride, tri(pentafluorophenyl)borate, methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, aluminum tribromide, tri(pentafluorophenyl) aluminum, dibutyltin dichloride, tin tetrachloride, phosphorus trichloride, phosphorus pentachloride, antimony trichloride, and antimony pentachloride. In particular, ethyl aluminum dichloride, ethyl aluminum dibromide, diethyl aluminum chloride, diethyl aluminum bromide, ethyl aluminum sesquichloride, and ethyl aluminum sesquibromide are preferable.

As the halogen, chlorine or bromine is preferable.

The halogen-containing compound (component (D-1)) which is a Lewis acid may be used alone or in combination of two or more.

Examples of the metal halide used in the component (D-2) include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide, and gold bromide. In particular, magnesium chloride, calcium chloride, barium chloride, zinc chloride, manganese chloride, and copper chloride are preferable, and magnesium chloride, zinc chloride, manganese chloride, and copper chloride are more preferable.

The Lewis base used in the component (D-2) is preferably a phosphorus compound, a carbonyl compound, a nitrogen compound, an ether compound, or an alcohol. Examples include tributyl phosphate, tri-2-ethylhexyl phosphate, triphenyl phosphate, tricresyl phosphate, triethylphosphine, tributylphosphine, triphenylphosphine, diethylphosphino ethane, diphenylphosphino ethane, acetylacetone, benzoylacetone, propionitrileacetone, valerylacetone, ethyl acetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, and lauryl alcohol. In particular, tri-2-ethylhexyl phosphate, tricresyl phosphate, acetylacetone, 2-ethylhexane acid, versatic acid, 2-ethylhexyl alcohol, 1-decanol, and lauryl alcohol are preferable.

The Lewis base is brought to reaction at a ratio of 0.01 mol to 30 mol, preferably 0.5 mol to 10 mol, per 1 mol of the metal halide. By using a reaction product with the Lewis base, metal remaining in the copolymer can be reduced.

These complex compounds of a metal halide and a Lewis base (components (D-2)) may be used alone or in combination of two or more.

The component (D-3) is, for example, benzyl chloride. The organic compound (component (D-3)) containing the active halogen may be used alone or in combination of two or more.

### <Aluminoxane (component (E))>

The polymerization catalyst according to this embodiment may further contain the aluminoxane (component (E)). The aluminoxane is a compound obtained by causing an organic aluminum compound to come into contact with a condensation agent, and is, for example, a linear aluminoxane or a cyclic aluminoxane having a repeating unit represented by the general formula: (-Al(R')O-) (where R' is a hydrocarbon group having a carbon number of 1 to 10, some hydrocarbon groups may be substituted with a halogen atom and/or an alkoxy group, and the polymerization degree of the repeating unit is preferably 5 or more, and more preferably 10 or more). Specific examples of R' include a methyl group, an ethyl group, a propyl group, and an isobutyl group. Of these, a methyl group is preferable. Examples of the organic aluminum compound used as a raw material for the aluminoxane include trialkyl aluminums such as trimethyl aluminum, triethyl aluminum, and triisobutyl aluminum, and mixtures thereof. Trimethyl aluminum is particularly preferable. For example, aluminoxane in which a mixture of trimethyl aluminum and tributyl aluminum is used as a raw material may be preferably used. One component (E) may be used alone, or two or more components (E) may be used in combination.

The content of the component (E) in the polymerization catalyst (the amount of the component (E) introduced into the polymerization system) is preferably set so that the element ratio Al/M of the central metal M contained in the component (A) and the aluminum element (Al) contained in the component (E) will be about 10 to 1000.

### (Method of producing copolymer)

A method of producing a copolymer according to one of the disclosed embodiments (hereafter also referred to as "production method according to this embodiment") includes copolymerizing monomers including a non-conjugated olefin compound and a conjugated diene compound in the presence of the foregoing polymerization catalyst (polymerization step). The production method according to this embodiment may optionally include other steps such as a coupling step and a cleaning step as appropriate. The production method according to this embodiment uses the foregoing polymerization catalyst to perform copolymerization, and therefore can efficiently produce a copolymer.

The monomers used in the production method according to this embodiment will be described below.

### <Non-conjugated olefin compound>

The production method according to this embodiment uses a non-conjugated olefin compound as a monomer. The non-conjugated olefin compound is not limited, and examples include α-olefins such as ethylene, propylene, 1-butene, 1-pentene, 1-hexene, 1-heptene, and 1-octene, and heteroatom-substituted alkene compounds such as vinyl pivalate, 1-phenylthioethane, and N-vinylpyrrolidone. The non-conjugated olefin compound is not limited, and may be any of these non-conjugated olefin compounds. Of these, α-olefins are more preferable. These non-conjugated olefin compounds may be used alone or in combination of two or more.

### <Conjugated diene compound>

The production method according to this embodiment uses a conjugated diene compound as a monomer. The conjugated diene compound is not limited, and examples include 1,3-butadiene, isoprene, 1,3-pentadiene, and 2,3-dimethylbutadiene. Of these, 1,3-butadiene or isoprene is preferable. 1,3-butadiene and isoprene are easily available, and the use of them can reduce the production costs. These conjugated diene compounds may be used alone or in combination of two or more.

### <Aromatic vinyl compound>

The production method according to this embodiment may further use an aromatic vinyl compound as a monomer. In other words, in the production method according to this embodiment, the monomers may further include the aromatic vinyl compound. Thus, a multicomponent copolymer containing a conjugated diene compound-derived unit, a non-conjugated olefin compound-derived unit, and an aromatic vinyl compound-derived unit can be produced. The aromatic vinyl compound is not limited, and examples include styrene, o-methylstyrene, m-methylstyrene, p-methylstyrene, o,p-dimethylstyrene, o-ethylstyrene, m-ethylstyrene, and p-ethylstyrene. Of these, styrene is preferable. These aromatic vinyl compounds may be used alone or in combination of two or more.

### <Polymerization step>

In the production method according to this embodiment, in the polymerization step, the monomers including the non-conjugated olefin compound and the conjugated diene compound and optionally including the aromatic vinyl compound are copolymerized in the presence of the foregoing polymerization catalyst. The polymerization step may be performed using any polymerization method such as solution polymerization, suspension polymerization, liquid phase bulk polymerization, emulsion polymerization, gas phase polymerization, or solid phase polymerization. The polymerization step may be performed in one stage, or in multiple (i.e. two or more) stages. The polymerization step in one stage is a step of causing simultaneous reaction of all types of monomers to be polymerized, to polymerize them. The polymerization step in multiple stages is a step of first causing reaction of the whole or part of one or two types of monomers to form a polymer (first polymerization stage) and then performing one or more stages (second to last polymerization stages) in which the remaining types of monomers and/or the balance of the one or two types of monomers is added to polymerize them.

The polymerization step may be optionally performed in the presence of a solvent. The solvent is not limited as long as it is inactive in the polymerization reaction. Examples include aromatic hydrocarbon solvents, aliphatic hydrocarbon solvents, and cycloaliphatic hydrocarbon solvents. An example of the aromatic hydrocarbon solvents is toluene. An example of the aliphatic hydrocarbon solvents is hexane. An example of the cycloaliphatic hydrocarbon solvents is cyclohexane. These solvents may be used alone or in combination of two or more. Of these, toluene is preferably used as the solvent.

In the presence of the polymerization catalyst, the microstructure in the copolymer to be produced can be controlled by controlling the introduction order of the monomers, the introduction amount of each monomer, and the other reaction conditions.

The polymerization step is preferably performed in an atmosphere of inert gas and preferably nitrogen gas or argon gas. The polymerization temperature in the polymerization step is not limited, but is preferably in a range of -100 °C to 200 °C as an example, and may be approximately room temperature. The pressure in the polymerization step is preferably in a range of 0.1 MPa to 10.0 MPa in order to sufficiently incorporate the non-conjugated olefin compound into the polymerization reaction system. The reaction time in the polymerization step is not limited, and may be selected as appropriate depending on conditions such as the microstructure desired of the copolymer to be obtained, the type of each monomer, the introduction amount of each monomer, the addition order of the monomers, the type of each component in the polymerization catalyst, and the polymerization temperature. For example, the reaction time is in a range of 1 sec to 10 days. In the polymerization step, the reaction may be terminated using a terminator such as methanol, ethanol, or isopropanol.

For example, since ethylene as the non-conjugated olefin compound is gas at ordinary temperatures and pressures, typically ethylene can be introduced into the polymerization system as a result of being charged at any pressure. The pressure when charging ethylene is not limited, but is preferably 0.05 MPa or more and more preferably 0.1 MPa or more, and is preferably 2.5 MPa or less and more preferably 2.0 MPa or less, from an industrial point of view.

The proportion (molar ratio) of the introduction amount of the non-conjugated olefin compound to the amount of the component (A) in the polymerization system is preferably 1,000 or more, more preferably 3,000 or more, and further preferably 5,000 or more, and is preferably 100,000 or less, more preferably 70,000 or less, and further preferably 50,000 or less, from the viewpoint of achieving the desired amount of the non-conjugated olefin compound-derived unit in the copolymer.

The proportion (molar ratio) of the introduction amount of the conjugated diene compound to the amount of the component (A) in the polymerization system is preferably 100 or more, more preferably 300 or more, and further preferably 500 or more, and is preferably 70,000 or less, more preferably 60,000 or less, and further preferably 50,000 or less, from the viewpoint of achieving the desired amount of the conjugated diene compound-derived unit in the copolymer.

The main catalyst (component (A)) may be prepared beforehand and contained in the polymerization catalyst. Alternatively, the main catalyst (component (A)) may be synthesized in the polymerization system in which copolymerization is performed in the polymerization step. That is, one embodiment may be such that the materials for preparing the component (A) are blended in the polymerization catalyst, and the component (A) is synthesized in the polymerization catalyst when copolymerizing the monomers in the presence of the polymerization catalyst. More specifically, the ligand component (component (a1)) and the rare earth element compound (component (a2)) may be blended in the polymerization catalyst, and the main catalyst (component (A)) may be synthesized from the component (a1) and the component (a2) in the polymerization catalyst when copolymerizing the monomers in the presence of the polymerization catalyst, the ligand component (component (a1)) being represented by the general formula (Ia): 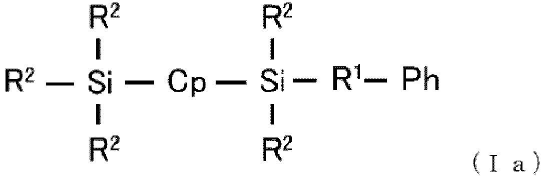 where Cp, Ph, R¹, and R² have the same definitions as in the general formula (I), and the rare earth element compound (component (a2)) being represented by the general formula (Ib): 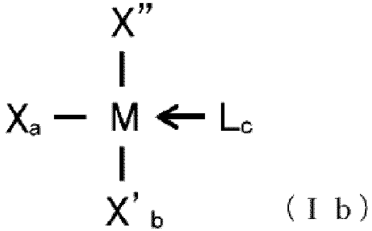 where M is the central metal selected from rare earth elements, X, X', and X" are each a hydrogen atom, a halogen atom, an alkoxide group, a thiolate group, an amide group, a silyl group, or a hydrocarbon group having a carbon number of 1 to 20, the hydrocarbon group having a carbon number of 1 to 20 may have a group containing silicon, oxygen, nitrogen, sulfur, or phosphorus at a terminal or inside thereof, X, X', and X" may be the same or different, a and b are each independently an integer of 0 to 3 where a + b ≥ 1, L is a neutral Lewis base, and c is an integer of 0 to 3. By synthesizing the component (A) in the polymerization system in which copolymerization is performed, the time and labor required to prepare the main catalyst before the copolymerization can be saved.

### <Coupling step>

The coupling step is a step of performing reaction (coupling reaction) to modify at least part (for example, a terminal) of a polymer chain of the copolymer obtained in the polymerization step. The coupling reaction thus performed can increase the number-average molecular weight (Mn). The coupling reaction is preferably performed when the polymerization reaction has reached 100 %.

The coupling agent used in the coupling reaction is not limited, and may be selected as appropriate depending on the intended use. Examples include tin-containing compounds such as bis(maleic acid-1-octadecyl)dioctyltin; isocyanate compounds such as 4,4'-diphenylmethane diisocyanate; and alkoxysilane compounds such as glycidylpropyltrimethoxysilane. These coupling agents may be used alone or in combination of two or more. Of these, bis(maleic acid-1-octadecyl)dioctyltin is preferable from the viewpoint of reaction efficiency and low gel formation.

### <Cleaning step>

The cleaning step is a step of cleaning the copolymer after the polymerization step or the coupling step. The cleaning step can favorably reduce the catalyst residue in the copolymer. The medium used in the cleaning is not limited, and may be selected as appropriate depending on the intended use. Examples include solvents such as methanol, ethanol, and isopropanol. An acid (such as hydrochloric acid, sulfuric acid, or nitric acid) may be added to these solvents, in the case of using a Lewis acid-derived compound as the polymerization catalyst. The amount of the acid added is preferably 15 mol% or less with respect to the solvent. If the amount of the acid added is more than 15 mol%, there is a possibility that the acid remains in the copolymer and adversely affects reaction in subsequent kneading and vulcanization.

### EXAMPLES

The presently disclosed techniques will be described in more detail below by way of examples, although these examples are not intended to limit the scope of the present disclosure in any way.

### (Comparative Example 1)

70 g of styrene as an aromatic vinyl compound and 613 g of toluene were added into a sufficiently dried 2,000 mL pressure-resistant stainless steel reactor.

Meanwhile, in a glove box in a nitrogen atmosphere, 0.075 mmol of mono(bis(1,3-tert-butyldimethylsilyl)indenyl)bis(bis(dimethylsilyl)amide) gadolinium complex 1,3-[(t-Bu)Me₂Si]₂C₉H₅Gd[N(SiHMe₂)₂]₂ as a main catalyst, 0.075 mmol of trityltetrakis(pentafluorophenyl)borate [Ph₃CB(C₆F₅)₄] as an ionic compound (component (C)), and 0.45 mmol of triisobutyl aluminum as an organic metal compound (component (B)) were added into a glass container and 20 mL of toluene was added to yield a polymerization catalyst solution. The polymerization catalyst solution was then added into the pressure-resistant stainless steel reactor, and heated to 60 °C. Next, ethylene as a non-conjugated olefin compound was added into the pressure-resistant stainless steel reactor at a pressure of 1.5 MPa, and copolymerization was performed at 75 °C for a total of 4 hr. During this, 67 g of a toluene solution containing 18 g of 1,3-butadiene as a conjugated diene compound was continuously added into the pressure-resistant stainless steel reactor at a rate of 0.3 mL/min to 0.4 mL/min.

Next, 1 mL of an isopropanol solution of 5 mass% of 2,2'-methylene-bis(4-ethyl-6-t-butylphenol) (NS-5) was added into the pressure-resistant stainless steel reactor, to terminate the copolymerization reaction. Following this, a large amount of methanol was used to separate a copolymer, which was then vacuum dried at 50 °C to obtain a copolymer A.

### (Example 1)

70 g of styrene as an aromatic vinyl compound and 613 g of toluene were added into a sufficiently dried 2,000 mL pressure-resistant stainless steel reactor.

Meanwhile, in a glove box in a nitrogen atmosphere, 0.075 mmol of mono((1-benzyldimethylsilyl-3-trimethylsilyl)indenyl)bis(bis(dimethylsilyl)a mide) gadolinium complex [1-C₆H₅CH₂Me₂Si-3-Me₃Si]C₉H₅Gd[N(SiHMe₂)₂]₂ as a main catalyst (component (A)), 0.075 mmol of trityltetrakis(pentafluorophenyl)borate [Ph₃CB(C₆F₅)₄] as an ionic compound (component (C)), and 0.75 mmol of triisobutyl aluminum as an organic metal compound (component (B)) were added into a glass container and 20 mL of toluene was added to yield a polymerization catalyst solution. The polymerization catalyst solution was then added into the pressure-resistant stainless steel reactor, and heated to 60 °C. Next, ethylene as a non-conjugated olefin compound was added into the pressure-resistant stainless steel reactor at a pressure of 1.5 MPa, and copolymerization was performed at 75 °C for a total of 4 hr. During this, 67 g of a toluene solution containing 18 g of 1,3-butadiene as a conjugated diene compound was continuously added into the pressure-resistant stainless steel reactor at a rate of 0.3 mL/min to 0.4 mL/min.

Next, 1 mL of an isopropanol solution of 5 mass% of 2,2'-methylene-bis(4-ethyl-6-t-butylphenol) (NS-5) was added into the pressure-resistant stainless steel reactor, to terminate the copolymerization reaction. Following this, a large amount of methanol was used to separate a copolymer, which was then vacuum dried at 50 °C to obtain a copolymer B.

The ligand in the main catalyst is a ligand in which Cp is an indene skeleton, Ph is a benzene ring, R¹ is a methylene group, and R² are all a methyl group in the foregoing general formula (I).

### (Example 2)

70 g of styrene as an aromatic vinyl compound and 613 g of toluene were added into a sufficiently dried 2,000 mL pressure-resistant stainless steel reactor.

Meanwhile, in a glove box in a nitrogen atmosphere, 0.075 mmol of mono((1-benzyldimethylsilyl-3-tert-butyldimethylsilyl)indenyl)bis(bis(dimet hylsilyl)amide) gadolinium complex [1-C₆H₅CH₂Me₂Si-3-(t-Bu)Me₂Si]C₉H₅Gd[N(SiHMe₂)₂]₂ as a main catalyst (component (A)), 0.075 mmol of trityltetrakis(pentafluorophenyl)borate [Ph₃CB(C₆F₅)₄] as an ionic compound (component (C)), and 0.75 mmol of triisobutyl aluminum as an organic metal compound (component (B)) were added into a glass container and 20 mL of toluene was added to yield a polymerization catalyst solution. The polymerization catalyst solution was then added into the pressure-resistant stainless steel reactor, and heated to 60 °C. Next, ethylene as a non-conjugated olefin compound was added into the pressure-resistant stainless steel reactor at a pressure of 1.5 MPa, and copolymerization was performed at 75 °C for a total of 4 hr. During this, 67 g of a toluene solution containing 18 g of 1,3-butadiene as a conjugated diene compound was continuously added into the pressure-resistant stainless steel reactor at a rate of 0.3 mL/min to 0.4 mL/min.

Next, 1 mL of an isopropanol solution of 5 mass% of 2,2'-methylene-bis(4-ethyl-6-t-butylphenol) (NS-5) was added into the pressure-resistant stainless steel reactor, to terminate the copolymerization reaction. Following this, a large amount of methanol was used to separate a copolymer, which was then vacuum dried at 50 °C to obtain a copolymer C.

The ligand in the main catalyst is a ligand in which Cp is an indene skeleton, Ph is a benzene ring, R¹ is a methylene group, and two R² binding to Si that binds to R¹ are a methyl group, two of three R² binding to Si that does not bind to R¹ are a methyl group, and one of the three R² is a tert-butyl group in the foregoing general formula (I).

### (Example 3)

70 g of styrene as an aromatic vinyl compound and 613 g of toluene were added into a sufficiently dried 2,000 mL pressure-resistant stainless steel reactor.

Meanwhile, in a glove box in a nitrogen atmosphere, 0.0375 mmol of mono((1-benzyldimethylsilyl-3-tert-butyldimethylsilyl)indenyl)bis(bis(dimet hylsilyl)amide) gadolinium complex [1-C₆H₅CH₂Me₂Si-3-(t-Bu)Me₂Si]C₉H₅Gd[N(SiHMe₂)₂]₂ as a main catalyst (component (A)), 0.0375 mmol of trityltetrakis(pentafluorophenyl)borate [Ph₃CB(C₆F₅)₄] as an ionic compound (component (C)), and 0.75 mmol of triisobutyl aluminum as an organic metal compound (component (B)) were added into a glass container and 10 mL of toluene was added to yield a polymerization catalyst solution. The polymerization catalyst solution was then added into the pressure-resistant stainless steel reactor, and heated to 60 °C. Next, ethylene as a non-conjugated olefin compound was added into the pressure-resistant stainless steel reactor at a pressure of 1.5 MPa, and copolymerization was performed at 75 °C for a total of 4 hr. During this, 67 g of a toluene solution containing 18 g of 1,3-butadiene as a conjugated diene compound was continuously added into the pressure-resistant stainless steel reactor at a rate of 0.3 mL/min to 0.4 mL/min.

Next, 1 mL of an isopropanol solution of 5 mass% of 2,2'-methylene-bis(4-ethyl-6-t-butylphenol) (NS-5) was added into the pressure-resistant stainless steel reactor, to terminate the copolymerization reaction. Following this, a large amount of methanol was used to separate a copolymer, which was then vacuum dried at 50 °C to obtain a copolymer D.

The ligand in the main catalyst is the same as that in Example 2, i.e. a ligand in which Cp is an indene skeleton, Ph is a benzene ring, R¹ is a methylene group, and two R² binding to Si that binds to R¹ are a methyl group, two of three R² binding to Si that does not bind to R¹ are a methyl group, and one of the three R² is a tert-butyl group in the foregoing general formula (I).

### (Comparative Example 2)

70 g of styrene as an aromatic vinyl compound and 613 g of toluene were added into a sufficiently dried 2,000 mL pressure-resistant stainless steel reactor.

Meanwhile, in a glove box in a nitrogen atmosphere, 0.0375 mmol of mono((1-benzyl-3-tert-butyldimethylsilyl)indenyl)bis(bis(dimethylsilyl)amid e) gadolinium complex [1-C₆H₅CH₂-3-(t-Bu)Me₂Si]C₉H₅Gd[N(SiHMe)₂]₂ as a main catalyst (component (A)), 0.0375 mmol of trityltetrakis(pentafluorophenyl)borate [Ph₃CB(C₆F₅)₄] as an ionic compound (component (C)), and 1.50 mmol of triisobutyl aluminum as an organic metal compound (component (B)) were added into a glass container and 10 mL of toluene was added to yield a polymerization catalyst solution. The polymerization catalyst solution was then added into the pressure-resistant stainless steel reactor, and heated to 60 °C. Next, ethylene as a non-conjugated olefin compound was added into the pressure-resistant stainless steel reactor at a pressure of 1.5 MPa, and copolymerization was performed at 75 °C for a total of 4 hr. During this, 67 g of a toluene solution containing 18 g of 1,3-butadiene as a conjugated diene compound was continuously added into the pressure-resistant stainless steel reactor at a rate of 0.3 mL/min to 0.4 mL/min.

Next, 1 mL of an isopropanol solution of 5 mass% of 2,2'-methylene-bis(4-ethyl-6-t-butylphenol) (NS-5) was added into the pressure-resistant stainless steel reactor, to terminate the copolymerization reaction. Following this, a large amount of methanol was used to separate a copolymer, which was then vacuum dried at 50 °C to obtain a copolymer E.

For each of the obtained copolymers, the following measurements were carried out.

### (Polymerization activity)

In each example, the yield of the copolymer per unit time and per unit main catalyst amount was determined from the yield (g) of the copolymer, the amount (mmol) of the main catalyst used, and the copolymerization time (hr). The results are indicated in Table 1. A larger value indicates higher polymerization activity.

### (Number-average molecular weight, weight-average molecular weight, and molecular weight distribution)

The weight-average molecular weight (Mw), the number-average molecular weight (Mn), and the molecular weight distribution (Mw/Mn) of each copolymer in terms of polystyrene at a measurement temperature of 140 °C were determined using gel permeation chromatography [GPC: HLC-8321GPC/HT made by Tosoh Corporation, column: 2 HT-806M columns made by Shodex, detector: differential refractometer (RI)] with respect to monodisperse polystyrene. The results are indicated in Table 1.

### (Endothermic peak energy)

A sample of each copolymer was heated at a rate of 10 °C/min in a range of -150 °C to 150 °C using a DSC, and the endothermic peak (ΔH₁) from 0 °C to 100 °C and the endothermic peak (ΔH₂) from 100 °C to 150 °C were measured. The results are indicated in Table 1. A larger value indicates higher crystallinity.

### (Proportion of each unit in copolymer)

The proportions (mol%) of a styrene-derived unit (styrene unit), an ethylene-derived unit (ethylene unit), and a 1,3-butadiene-derived unit (butadiene unit) in each copolymer were determined from the ratio of integral value of each peak of a ¹H-NMR spectrum (100 °C, d-tetrachloroethane standard: 5.91 ppm). The results are indicated in Table 1.

**Table 1**

| | | Comparative Example 1 | Example 1 | Example 2 | Example 3 | Comparative Example 2 |
|---|---|---|---|---|---|---|
| Polymerization activity | [g/mmol·hr] | 309 | 603 | 583 | 968 | 387 |
| Weight-average molecular weight (Mw) | [×10³] | 378 | 254 | 224 | 372 | 875 |
| Number-average molecular weight (Mn) | [×10³] | 182 | 81 | 81 | 107 | 168 |
| Molecular weight distribution (Mw/Mn) | - | 2.08 | 3.14 | 2.77 | 3.48 | 5.21 |
| ΔH₁ (0-100°C) | [J/g] | 62.7 | 52.5 | 48.4 | 63.4 | 25.2 |
| ΔH₂ (100-150°C) | [J/g] | 9.1 | 13.9 | 13.6 | 21.7 | 46.9 |
| Styrene unit | [mol%] | 5.8 | 7.1 | 8.2 | 4.0 | 3.7 |
| Ethylene unit | [mol%] | 86.7 | 86.4 | 85.8 | 91.2 | 79.3 |
| Butadiene unit | [mol%] | 7.5 | 6.5 | 6.0 | 4.8 | 17.0 |

As can be understood from Table 1, in Examples 1 to 3 each using a polymerization catalyst according to the present disclosure, the polymerization activity was improved as compared with Comparative Examples 1 and 2.

### INDUSTRIAL APPLICABILITY

It is therefore possible to provide a polymerization catalyst capable of improving polymerization activity in copolymerization. It is also possible to provide a copolymer production method capable of efficiently producing a copolymer.

## Claims

1. A polymerization catalyst comprising
a main catalyst as a component (A) having a ligand represented by a general formula (I): 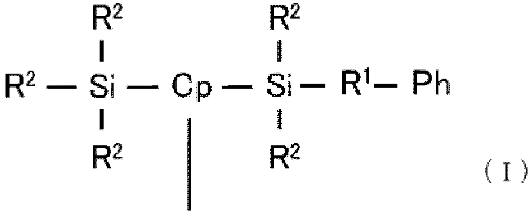 where Cp is a cyclopentadiene-based skeleton selected from a cyclopentadiene skeleton, an indene skeleton, and a fluorene skeleton, Ph is an aromatic ring, R¹ is a single bond or any group, and R² are any groups that are the same or different.

2. The polymerization catalyst according to claim 1, wherein a central metal to which the ligand binds is selected from rare earth elements.

3. The polymerization catalyst according to claim 1 or 2, wherein the cyclopentadiene-based skeleton is selected from the cyclopentadiene skeleton and the indene skeleton, and
respective two silicon atoms in the general formula (I) bind to a first position and a third position of the cyclopentadiene-based skeleton.

4. The polymerization catalyst according to any of claims 1 to 3, wherein the main catalyst as the component (A) is represented by a general formula (II): 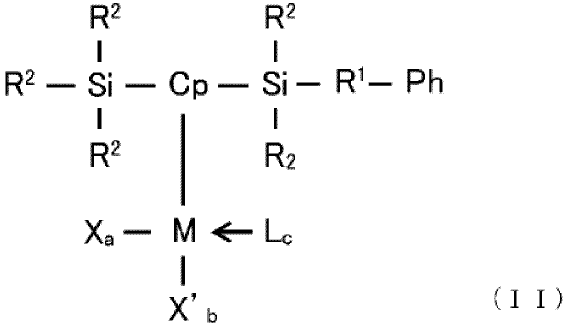 where Cp, Ph, R¹, and R² have the same definitions as in the general formula (I), M is a central metal selected from rare earth elements, X and X' are each a hydrogen atom, a halogen atom, an alkoxide group, a thiolate group, an amide group, a silyl group, or a hydrocarbon group having a carbon number of 1 to 20, the hydrocarbon group having a carbon number of 1 to 20 has or does not have a group containing silicon, oxygen, nitrogen, sulfur, or phosphorus at a terminal or inside thereof, X and X' are the same or different, a and b are each independently an integer of 0 to 3 where a + b ≥ 1, L is a neutral Lewis base, and c is an integer of 0 to 3.

5. The polymerization catalyst according to any of claims 1 to 4, further comprising
an organic metal compound as a component (B) represented by a general formula (III):
ZR²¹ₑR²²_{f}R²³_{g} (III)
where Z is a metal element selected from the group consisting of elements of groups 1, 2, 12, and 13 in a periodic table, R²¹ and R²² are each a hydrocarbon group having a carbon number of 1 to 10 or a hydrogen atom, R²³ is a hydrocarbon group having a carbon number of 1 to 10, R²¹, R²², and R²³ are the same or different, e is 1 and f and g are 0 in the case where Z is a metal element of group 1 in the periodic table, e and f are 1 and g is 0 in the case where Z is a metal element of group 2 or 12 in the periodic table, and e, f, and g are 1 in the case where Z is a metal element of group 13 in the periodic table.

6. The polymerization catalyst according to any of claims 1 to 5, further comprising
an ionic compound as a component (C).

7. The polymerization catalyst according to any of claims 1 to 6, further comprising
a halogen compound as a component (D).

8. The polymerization catalyst according to any of claims 1 to 7, further comprising
an aluminoxane as a component (E).

9. A method of producing a copolymer, the method comprising
copolymerizing monomers including a non-conjugated olefin compound and a conjugated diene compound in presence of the polymerization catalyst according to any of claims 1 to 8.

10. The method of producing a copolymer according to claim 9, wherein the monomers further include an aromatic vinyl compound.

11. The method of producing a copolymer according to claim 9 or 10, wherein the main catalyst as the component (A) is synthesized in a polymerization system in which the copolymerization is performed.

12. The method of producing a copolymer according to claim 11, wherein the main catalyst as the component (A) is synthesized in the polymerization system in which the copolymerization is performed, from a ligand component as a component (a1) and a rare earth element compound as a component (a2), the ligand component as the component (a1) being represented by a general formula (Ia): 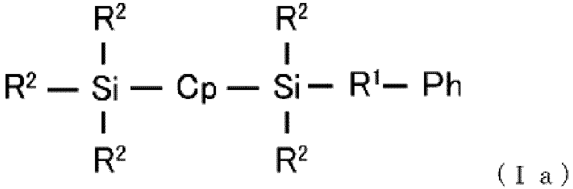 where Cp, Ph, R¹, and R² have the same definitions as in the general formula (I), and the rare earth element compound as the component (a2) being represented by a general formula (Ib): 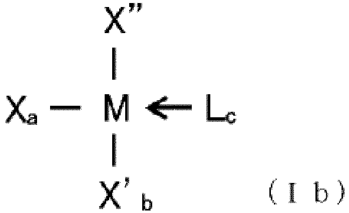 where M is a central metal selected from rare earth elements, X, X', and X" are each a hydrogen atom, a halogen atom, an alkoxide group, a thiolate group, an amide group, a silyl group, or a hydrocarbon group having a carbon number of 1 to 20, the hydrocarbon group having a carbon number of 1 to 20 has or does not have a group containing silicon, oxygen, nitrogen, sulfur, or phosphorus at a terminal or inside thereof, X, X', and X" are the same or different, a and b are each independently an integer of 0 to 3 where a + b ≥ 1, L is a neutral Lewis base, and c is an integer of 0 to 3.
